# EUROPEAN PATENT APPLICATION

(11) **EP 1 764 208 A2**
(43) Date of publication of application: **21.03.2007**
(21) Application number: 06018244.1
(22) Date of filing: 31.08.2006
(51) Int. Cl.: B29C 67/00

(54) **System and methods of solid freeform fabrication with interchangeable powder bins**

(30) Priority: 19.09.2005 US 229886
(71) Applicant: Hewlett-Packard Development Company, L.P., Houston, TX 77070 (US)
(72) Inventor: Nielsen, Jeffrey A., Corvallis Oregon 97330 (US); Hunter, Shawn D., Corvallis Oregon 97330 (US); Boyd, Melissa D., Corvallis Oregon 97330 (US); Collins, David C., Corvallis Oregon 97330 (US)
(74) Representative: Schoppe, Fritz

(57) **Abstract**

Solid freeform fabrication systems, powder supply bins for solid freeform fabrication systems, and methods of solid freeform fabrication are disclosed. One exemplary solid freeform fabrication system (100) includes a removable powder supply bin (110), a build bin (104), a roller (112), and a print head (104) disposed above the build bin that deposits a binder onto the powder in the build bin in a preselected pattern.

## Description

### RELATED APPLICATION

This application is related to U.S. utility patent application serial no. 11/191,797 (HP Docket No. 200406140-1), filed on July 28, 2005.

### BACKGROUND

Conventional powder supply and build bins in solid freeform fabrication (SFF) systems include vertical walls attached to the working surface of the SFF machine and a permanent bottom plate that is height-controlled throughout the build process. The bottom plate of the powder-source bin increments upward during the build process to provide additional powder that can be spread above a build plate in the build bin. The build plate is simultaneously incremented downward to accept a new layer of build powder. Regardless of the size of the desired prototype, or build, a volume of powder to fill the entire build bin to the height of the parts being built is required. This can sometimes limit the ability of a user to produce parts with limited powder on-hand.

One issue with binder-powder SFF systems is the amount of time spent between print jobs in the management of the powder in the system. Specifically, parts are typically dug out of build bins or the excess powder vacuumed away, the waste bins are emptied, and supply powder bins are refilled.

Once a build project is completed, the SFF machine remains idle while parts are removed from the build bin. Since the parts that have just been built are typically surrounded on all sides by bulk powder, this process can be very slow as the user brushes or vacuums powder away a little at a time, searching for the recently-fabricated part(s). This process is time-consuming, and is extended even longer if parts require a "dry time" prior to removal from the supporting powder. Once the removal process is started, the solid freeform fabrication machine cannot be further utilized until this process is complete. The removal of parts from the supporting powder is performed directly at the machine, where powder is difficult to contain and, again, may be breathed by the operator. Typically, a vacuum is required to recover powder scattered on the SFF system's working surface.

If the operator desires to change out the powder in the supply bin, then both the powder supply bin and the build bin must be completely cleaned to prevent cross-contamination of powders. This process is manual, requiring the user to scoop, brush, and vacuum powder from the bins prior to pouring new powder into the source bin.

It would be desirable to have a solid freeform fabrication system that is easier and less messy to use, and would have less down-time for set up, powder dig-out, and powder change-out processes.

### BRIEF DESCRIPTION OF THE DRAWINGS

Many aspects of this disclosure can be better understood with reference to the following drawings. The components in the drawings are not necessarily to scale. Moreover, in the drawings, like reference numerals designate corresponding, but not necessarily identical, parts throughout the several views.
FIG. 1 illustrates a solid freeform fabrication system that uses a printing process to fabricate desired products. An embodiment of the present invention can be implemented in the system illustrated in FIG. 1.
FIG. 2 illustrates a partial top view of the solid freeform fabrication system of FIG. 1, showing an exemplary supply or build bin.
FIG. 3 illustrates a cross sectional view of an embodiment of the supply or build bin taken along section line A-A in FIG. 2.
FIG. 4 illustrates a cross sectional view of an embodiment of the supply or build bin taken along section line A-A in FIG. 2.
FIG. 5 illustrates a side view of an embodiment of the disclosed supply or build bin.
FIG. 6 is a top view of an embodiment of a continuous printing platform used in the system of FIG. 1.
FIG. 7 is a flow diagram illustrating an embodiment of a disclosed method of solid freeform fabrication.

### DETAILED DESCRIPTION

The disclosed solid freeform fabrication (SFF) systems have incorporated therein a convenient supply powder and build bin packaging. The supply powder bin and/or build bin can include a removable top, four side walls, a piston-like bottom that supports the powder and allows a printer piston to feed powder to the spreader during the printing and object fabrication process, and features that easily locate/attach/register the bin with the SFF system. The disclosed bins can be either disposable or reusable and are configured to be interchangeable within the SFF system. The disclosed bins simplify the set-up process, as well as reduce the powder spillage and the required clean up associated with three-dimensional (3D) printing and selective laser sintering (SLS) processes.

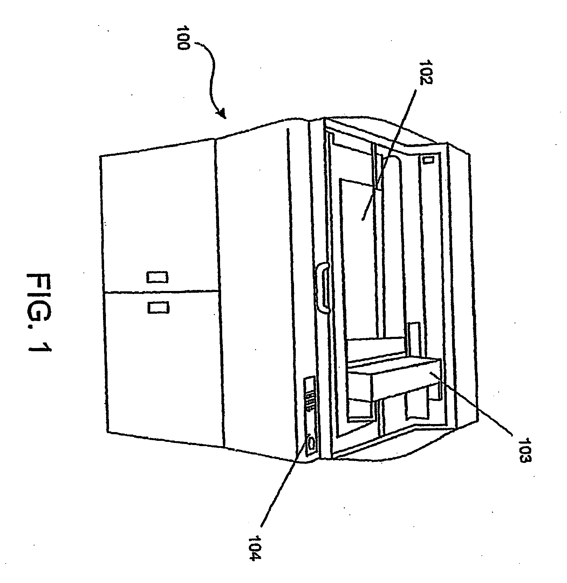

Having thus generally described the disclosed SFF systems, reference will now be made to the figures. FIG. 1 illustrates one solid freeform fabrication system that uses 3D printing technology. The disclosed powder bins, apparatuses, and methods can also be applied to SLS systems.

In the SFF system 100 of FIG. 1, a powdery material (e.g., a plaster- or starch-based powder) is used to form each individual layer of the desired product. To do this, a measured quantity of powder is first provided from a removable supply chamber or bin in the solid freeform fabrication system 100. A powder spreading mechanism, such as a roller, preferably incorporated into a moving stage 103, then distributes and compresses the powder at the top of a fabrication chamber or removable build bin 102 to a desired thickness. Then, a print head (not shown) deposits an adhesive or binder onto the powder in the build bin 102 in a two dimensional pattern. This two dimensional pattern becomes a thin cross section of the desired product. The print head may also eject colored binder, toner, and/or color activator into the layer of powder to provide a desired color or color pattern for this particular cross section of the desired product. Although a print head is described with respect to FIG. 1 as an example, other binding apparatuses can be used, for example, a laser that sinters the powder.

The powder becomes bonded in the areas where the adhesive or binder is deposited, thereby forming a thin layer of the desired product. After each layer of the 3D object is fabricated, the build bin 102 (in which the object sits) is repositioned downward along the z-axis so that the next layer of the object can be formed on top of the previously formed layer. By way of example, the build bin 102 can have dimensions such as 8"x10"x10" or 6"x6"x6" to accommodate fabricators and 3D objects of various sizes.

The process is repeated with a new layer of powder being applied over the top of the previous layer in the build bin 102. The next cross section of the desired product is then printed with adhesive or binder into the new powder layer. The adhesive also serves to bind the adjacent or successive layers of the desired product together. A user interface or control panel 104 can be provided to allow the user to control the fabrication process.

This process continues until the entire object is formed within the powder bed in the build bin 102. The build bin 102 can be removed from the SFF system 100 so that the fabricated object can be removed from the build bin 102 outside of the SFF system 100. The extra powder that is not bonded by the adhesive is then brushed or vacuumed away leaving the base or "green" object.

The SFF system 100 also includes a controller (not shown) which is programmed to, among other things, control the positioning and repositioning of the print head 103 during the 3D object fabrication process. The controller can take the form of a discrete module positioned proximate to the print head; alternatively, the operations performed by the controller can be distributed among a plurality of controllers, processors or the like, and/or the controller can be remotely located relative to the print head.

Such a printing process offers the advantages of speedy fabrication and low materials cost. It is considered one of the fastest solid freeform fabrication methods, and can be performed using a variety of colors.

The print head in the SFF system 100 can include inkjet technology for ejecting a binder or adhesive on a powder layer to form the layers of the desired object. In inkjet technology, the print head ejects drops of binder in a selective pattern to create the image being printed, or in the case of solid freeform fabrication, to color the object being fabricated. As used herein and in the attached claims, the term "binder" is used broadly to mean any substance ejected by a print head to form an object being fabricated. Consequently, the term "binder" includes, but is not limited to, binders, adhesives, etc. The binder can be, for example, clear (to create non-colored parts) or colored (to create colored objects or parts of objects).

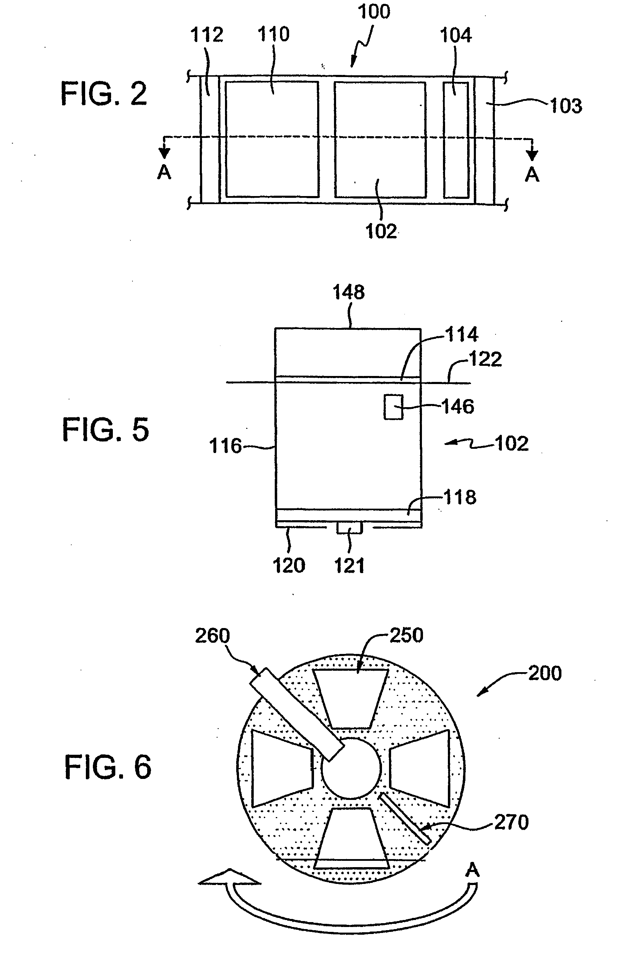

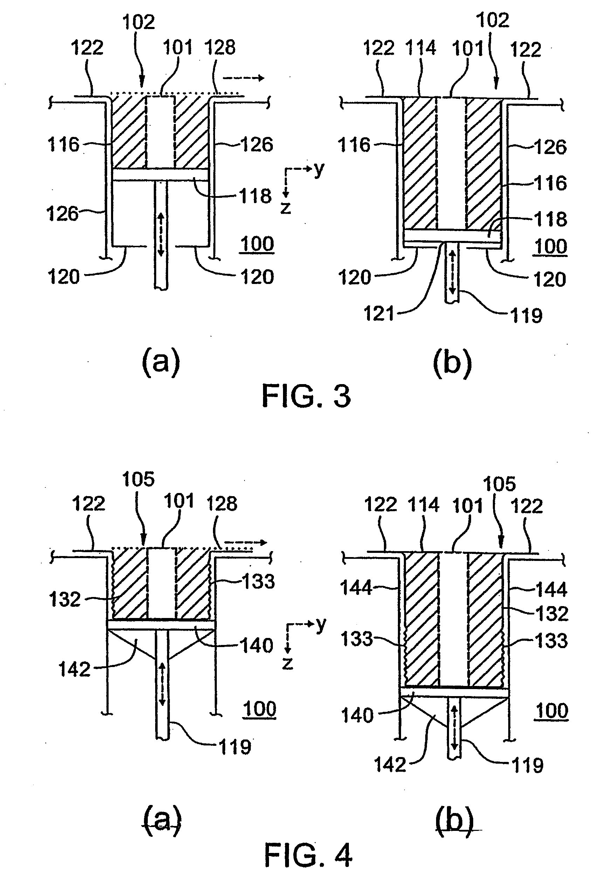

FIG. 2 illustrates a partial top view of the SFF system 100 of FIG. 1, showing an exemplary supply bin 110 and a build bin 102 adjacent the supply bin 110. The roller 112 traverses the supply bin 110, and moves a very thin layer of powder from the top surface of the supply bin 110 onto a platform of the build bin 102. Thereafter, the print head 103 deposits the binder onto the powder layer on the platform of the build bin 102, thereby forming one layer of the desired object. On the opposite side of the build bin 102 from the supply bin 110 is an optional shallow catch bin 104. The shallow catch bin 104 can catch small amounts of excess power that is a natural part of the spreading process. This can allow for easier segregation of different powder types. In embodiments that do not include the shallow catch bin 104, the excess power can be captured in a larger default catch bin (not shown) disposed on the side of the build bin 102 opposite the powder supply bin 110. The supply bin 110 and/or the build bin 102 are designed to be easily removable from the system 100. The supply bin 110 and/or the build bin 102 can thus be reused for another fabrication or disposed of.

FIG. 3 illustrates a partial cross section of an embodiment of the disclosed SFF system 100, taken along section line A-A in FIG. 2. FIG. 3 shows the exemplary build bin 102 (a) during fabrication of an object 101, and (b) after fabrication of the object 101, while the object 101 is seated in a bed of powder 128 in the build bin 102. The build bin 102 includes an optional removable lid 114, rigid boundaries or side walls 116 (*e.g*., four side walls for a square or rectangular bin), and a bottom moveable platform 118 that can be operated in the z-direction by a piston cylinder 119 already in place in the solid freeform fabrication system 100. The build bin 102 can have an optional quick-release interface 121 that interacts with a linear motion actuator 119 such that the actuator 119 can engage the bottom moveable platform 118. The quick-release interface can be, for example, a latch, a magnet, or other device(s) that would allow the actuator 119 to easily engage and then release the platform 118. The actuator is depicted in FIG. 3 as a piston cylinder, it could instead be, for example, linear motors, lead screws, servo motors, hydraulic pistons, air-driven pistons, etc.

As shown in FIG. 3 (a), when the build bin 102 is placed into the system 100, the side walls 116 fit into and lock in place within a build bin housing 126. The build bin housing 126 can have, for example, grooves that can accommodate matching protrusions on the build bin 102 (not shown), or simple mechanical latches. The build bin 102 (or supply bin 110) can have one or more mechanical interfaces between the bin and the SFF system 100 that locate the bin in the desired location (x-; y-, and z-planes). The interfaces can be, for example, one or more flanges, a slidable mechanism (in y- or z-direction), or one or more dowels that protrude from a side of the bin housing. In one embodiment, the bin(s) drop into the system in the z-direction, and have interfaces that hold and locate it approximately flush with the working surface of the system 100. In the embodiment shown in FIGs 3 and 4 the bins have a pair of upper flanges 122 that extend beyond the side walls of the bin in the y-direction, and engage at least one upper working surface 124 in the system 100. The upper flanges 122 engage an upper surface 124 of the bin housing 126 and aid in placement of the build bin 102 and/or maintaining the build bin 102 in place during operation of the system 100. In place of the flanges 122, one embodiment of the build bin 102 can have mechanical latches or magnets to ensure that only the powder is lifted by the actuator 119, and not the entire bin 102 itself. Positive downward force can be applied by cam action or springs in the latches.

Alternatively, or in addition, the build bin 102 can include vertical registration components such vertical pins with hardened points on the tips, located in the system 100, that contact either the bottom surface 118 or the flanges 122 or lip around the bin 102. Use of registration components minimize the possibility of powder interfering with the registration interface. Further, the bin 102 can include one or more seating sensors (not shown) to detect when the bin 102 is properly seated in the system 100. Seating sensor(s) can be, for example, an electrical continuity check, a Hall effect sensor, a through-beam or reflected light sensor, and/or a high precision switch. In addition, the seating sensor can also include mechanical or electrical lockout features to ensure use of materials that are compatible with the SFF system.

In one embodiment, the linear motion actuator 119 pulls downward on the bottom moveable platform 118, which fits exactly inside the side walls 116 of the build powder bin 102. In one embodiment, the build bin 102 has a pair of lower flanges 120 that extend beneath and parallel to the bottom moveable platform 118, on which the platform 118 rests when the build bin 102 is full of powder and the fabricated part(s), as shown in FIG. 3 (b).

As depicted in FIG. 3 (a), the optional lid 114 is removed, thereby exposing the next layer of powder 128 for fabrication. The actuator 119 acts on the platform 118 to pull the platform 118 downward in the z-direction. A thin layer of powder 128 is deposited, the excess of which can be rolled forward in the y-direction toward a catch bin (not shown) by the roller 112, exposing one thin layer of powder 128 for each layer of the device or object fabrication.

The optional removable lid 114 can be, for example, a lid that peels back, or even completely off, slides on or off, or that snaps onto and off of a lip (not shown) of an upper surface of the build bin 102. The lid can also be designed, as in a snap-fit lid, to be re-installed after fabrication of an object so that the build bin 102, when full of powder and the fabricated object, can be removed from the system 100 with minimal risk of spilling the powder and/or creating airborne powder migration. The lid can be opened and/or removed either manually or by components in the SFF system 100.

The material of the build bin 102 can be any material that is sufficiently rigid to support a bin full of powder or slurry. For example, the material can be a metal or metal alloy, cellulosic material, or hard, stiff plastic (*e.g*., thermosets and thermoplastics, including for example, acetals, acrylics, terpolymers, alkyds, melamines, phenolic resins, polyarylates, polycarbonates, high density polyethylene, polyphenylene sulfide, polystyrene, polyvinyl chloride, styrene acrylonitrile, polyphenylsulfone, sulfones, unsaturated polyesters, polypropylene, polytetrafluoroethylene, polyethersulfone, polyetherketone, liquid crystalline polymers, or urea-formaldehyde molding compounds, *etc*.). The material of the build bin 102 can also include fillers for the polymers, the fillers being designed to be compatible with each polymer. The fillers can impart various properties to the polymeric material, such as increased strength. The build bin 102 can be designed to be either disposable or reusable, depending on the material selected for the build bin 102. In addition, in one embodiment, the build bin 102 includes low friction surfaces on side walls 116, whereby powder contained in the build bin 102 slides easily along the bin walls throughout the fabrication process.

FIG. 4 illustrates a cross sectional view of an embodiment of the build bin 105 taken along section line A-A in FIG. 2, the build bin 105 being a bag-like material. FIG. 4 shows the exemplary build bin 130 (a) during fabrication of the object 101, and (b) after fabrication of the object 101, while the object 101 is seated in a bed of powder 128 in the build bin 105. The build bin 105 includes an optional removable lid 114, a bag compartment 132, and a pair of upper flanges 122 that extend from an upper surface of the bin 105.

The bag compartment 132 includes an optional crinkle zone 133 that enables the bag to fold easily as a platform 140 and the actuator 119 operate on the bag compartment 132 in the z-direction. In the embodiments employing a bag compartment 132, the space/clearance between the bag compartment 132 and side walls in a build bin housing 144 is large enough to accommodate collapsed folds of the bag compartment 132.

The platform 140 and actuator 119 can be already in place in the system 100, and the build bin 105 is inserted to rest on top of the platform 140. The actuator 119 in one embodiment can have optional struts 142 to stabilize the actuator 119 during movement. The struts 142 can be, for example, a stiff metal, metal alloy, or a hard plastic material.

The build bin 105 can have a pair of upper flanges 122 that extend beyond the side walls. The upper flanges 122 engage an upper surface 124 of the bin housing 126 and aid in placement of the build bin 105. Preferably, the upper flanges 122 are of a stiffer material than the bag compartment 132 in order to aid in proper placement of the bag compartment 132. The upper flanges can be made of, for example, a cellulose-based material (e.g., cardboard), a metal, or a hard plastic.

In one embodiment, the linear motion actuator 119 pulls downward on the platform 140, which fits exactly inside the side walls of the build bin housing 144 in the system 100. As depicted in FIG. 4 (a), the optional lid 114 is removed, thereby depositing the powder. The actuator 119 acts on the platform 140 to pull the platform 140 downward, in the z-direction. As the platform 140 moves downward, the bag compartment 132 unfolds and is pulled downward by gravity. A thin layer of powder 128 is exposed, the excess of which can be rolled forward in the y-direction toward a catch bin (not shown) by the roller 112 (see FIG. 2), exposing one thin layer of powder 128 for each layer of the device fabrication.

The optional removable lid 114 can be, for example, a lid that peels back, or even completely off, or that snaps onto and off of a lip (not shown) of an upper surface of the build bin 105. The material of the bag compartment 132 can be any material that is sufficiently rigid to support a bin full of powder or slurry, yet sufficiently pliable to unfold upon expansion caused by the lowering of the actuator 119 and platform 140. The bag compartment is chosen to provide a barrier to environmental conditions such as, for example, air, humidity, moisture, grease, and/or light, *etc*. For example, the material of the bag compartment 132 can be any flexible polymeric material. These include but are not limited to flexible films of polyvinyl chloride, polyvinylidene, polyethylene, polyethylene copolymers, polyethylene naphthalate, polyester, polyamide, polyarylates, polybutylene terepthalate, polypropylene, polyurethane, cellulosics, and polysaccharides. The build bin 105 can be designed to be either disposable or reusable, depending on the material selected for the build bin 105. By using a bag compartment 132 for the build bin 105, the tolerance between the platform 140 and the side walls of the bin housing 144 can be reduced, as well as eliminating the need for o-rings that are typically used to create a tight seal.

By using a removable build bin, unused powder that is contained in the build bin can be easily removed from bin while the bin is outside of the solid freeform fabrication system. The build bin can be reused at a later time, for example as a supply bin 110 (once the fabricated object has been removed), or the powder recycled from the build bin for other uses. Thus, in one embodiment of the system 100, the supply bin 110 and the build bin are configured to be interchangeable. For example, the supply and build bins can both be removable, and be of the same size and shape to allow each one to fit into a housing for the other one.

In addition, as illustrated by FIG. 5, the build bin 102 can include a memory mechanism 146 that can communicate information to the controller about the supply bin, such as, for example, powder volume, powder type, bin manufacturer (*e.g*., to help determine if the supply bin is a genuine supply bin), allowable binder types for the powder, recommended spread-roller rotation speed, supply bin z-step size, expiration date of the powder, drop volume needed for a given layer thickness, setting time, etc. The memory mechanism 146 can be, for example, an integrated circuit (IC) chip, a tag or label with a bar code, and/or a mechanical device that conveys information about the powder level and/or the bin. An example of a mechanical device used as the memory mechanism 146 includes "break tabs," where certain tabs indicate a particular bin size and/or powder type. The SFF system 100 can be configured to determine which tabs are present upon insertion via sensors, switches, or other means. In addition, information about powder volume can be conveyed where the memory mechanism 146 includes a "gas gauge" type of device that tracks and coveys information about the remaining volume of powder after some usage.

The solid freeform fabrication system 100 can include a sensor that is capable of reading the memory mechanism 146. For example, in the case of an IC chip, the system 100 can use information from the build bin in tandem with the information from the inkjet supply's memory chip to ensure, for example, that the correct binder liquid and powder are mixed. The system 100 can also use the data encoded in or on the memory mechanism 146 to determine certain operating parameters, such as for example, print speed, drop volume per voxel, color maps, dry time needed after build completion, shrink or expansion size, adjustment factors, powder settling coefficients (*e.g*., to determine whether powder supports need to be included, and if so, how much support), minimum allowable layer thickness, etc.

Communication with the IC can be via contact pads or wireless via radio frequency signals. Generally the bar codes are read only, whereas the IC can be written to. The memory mechanism 146 can be placed anywhere on the build bin, so long as it can be read by a sensor in or on the SFF system 100.

The build bin 102 can include a handle 148. The handle 148 can be in any configuration (*e.g*., square or semicircular) and can be removable, collapsible, telescoping, and/or magnetic. In addition, the handle can be a notch or set of notches, inset into the build bin 102 or 105. The build bin is designed so that it can be removed from the system 100 by grasping and pulling on the handle 148, or inserting a removable handle into the features provided.

Fig. 6 illustrates a top view of an embodiment of a continuous printing platform 200 that can be used in the system 100 of Fig. 1. Multiple removable bins 250 are disposed in the substantially circular printing platform 200. The bins 250 are interchangeable powder supply bins or build bins. Disposed over the bins 250 is a print bar/powder spreader 260. The print head can be disposed on the same mechanism 260 as the powder spreader, as shown in Fig. 6, or can be disposed on a separate mechanism (not shown). Additionally, the printing platform can also include an optional extra powder chute 270. The chute 270 in one embodiment is disposed between two of the removable bins 250. As depicted by arrow A, the printing platform 200 rotates in a clockwise direction in one embodiment. In another embodiment, the printing platform rotates in a counter-clockwise direction. In this manner, the printbar/powder spreader 260 spreads the powder from a first bin 250 onto a build platform of a second bin 250. The printbar/powder spreader 260 then ejects binder onto the powder on the layer of powder platform, thus fabricating at least one layer of an object. The configuration of the printing platfrom 200 depicted in Fig. 6 allows multiple build bins to be printed at once, and also allows a continuous process. In the embodiment shown in Fig. 6, not every bin would have to have a part or object completely fabricated before the fabricated objects in a different bin could be removed. By temporarily stopping the fabrication process, the bins with the fabricated object can be removed and replaced with a new empty bin in which a new object can subsequently be fabricated. The embodiment of the printing platform 200 depicted in Fig. 6 increases the utilization of the print head during the printing process and increases utilization of the SFF system 100 by not necessitating that every part within the multiple bins 250 be completed at one time. In one embodiment, the printing platform 200 is fixed and the printbar/powder spreader 260 rotates over the bins.

In other embodiments of the system 100, the bins include features that allow attachment to other pieces of the system 100 for further processing. For example, the bins can include features for attachment to other equipment such as, for example, a dryer, a de-powdering station, a powder refill station, a powder packaging station (for either reusable powder or for packing fresh containers after shipping), *etc*.

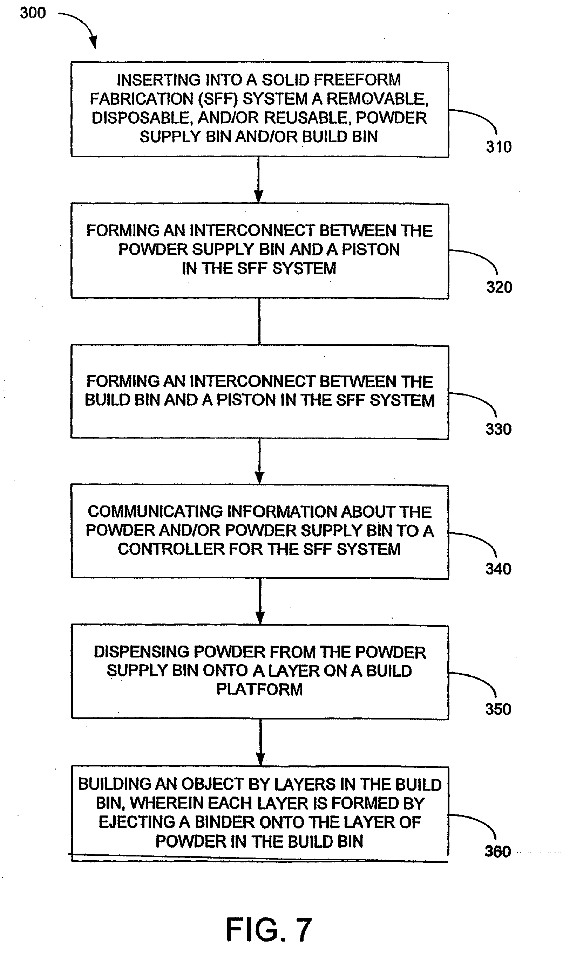

Also disclosed are methods of solid freeform fabrication, using the disclosed build bins. FIG. 7 is a flow diagram describing a representative method 300 for forming a three-dimensional object, using the solid freeform fabrication system 100. In block 310, removable, disposable, and/or reusable powder supply and build bins are inserted into a solid freeform fabrication system. In optional block 320, an optional interconnect is formed between the powder supply bin and a piston cylinder in the solid freeform fabrication system. In some embodiments, gravity alone is sufficient to provide an interconnection between the bin(s) and the piston. Similarly, as shown in optional block 330, an optional interconnect is formed between the build bin and a piston in the SFF system 100. Then, as shown in block 340, information can optionally be communicated from the powder supply bin to a controller for the solid freeform fabrication system. Powder is then dispensed from the powder bin onto a build platform, as shown in block 350. Block 360 shows how an object is built in a build bin, by ejecting a binder from, for example, an inkjet print head, onto the layer of powder on the build platform, thereby forming layers of the object. Where reasonable, the steps of the disclosed methods can be performed out of order from the sequence(s) discussed herein. For example, but without limitation, the steps depicted in blocks 320 and 330 can be performed in reverse order.

Many variations and modifications may be made to the above-described embodiments. All such modifications and variations are intended to be included herein within the scope of this disclosure and protected by the following claims.

## Claims

1. A build bin (102) for a solid freeform fabrication system (100), comprising:
side walls (116); and
a piston bottom (118) configured to be acted on by a drive mechanism of the solid freeform fabrication system,
wherein the build bin is interchangeable with a powder supply bin (110).

2. The build bin of claim 1, wherein the piston bottom comprises a quick-release interface (121) with the drive mechanism of the solid freeform fabrication system, wherein the interface is selected from the group consisting of: a set of magnets and a latching mechanism.

3. The build bin of claim 1, wherein the build bin further comprises a memory mechanism (146) that communicates information about the powder to a controller for the solid freeform fabrication system, wherein the information is one of the group consisting of: powder volume, powder type, bin manufacturer, allowable binder types for the powder, recommended spread-roller rotation speed, supply bin z-step size, expiration date of the powder, drop volume needed for a given layer thickness, and setting time.

4. The build bin of claim 1, wherein the build bin further comprises a mechanical interface (122) between the build bin and the system, wherein the interface mechanically stabilizes the bin in the solid freeform fabrication system by engaging at least one surface of the system in which the bin is seated.

5. The build bin of claim 1, wherein the build bin is constructed of a material chosen from at least one of the following: a metal; a metal alloy; cellulosic material; hard, stiff plastic; and combinations thereof.

6. The build bin of claim 1, wherein the build bin is constructed of a polymeric material selected from the group consisting of: acetals, acrylics, terpolymers, alkyds, melamines, phenolic resins, polyarylates, polycarbonates, polyethylenes, polypropylene, polyphenylene sulfide, polystyrene, polyvinyl chloride, polytetrafluoroethylene, styrene acrylonitrile, polyphenylsulfone, polyethersulfones, polyetherketone, unsaturated polyesters, liquid crystalline polymers, polyurethanes, urea-formaldehyde molding compounds, and combinations thereof.

7. The build bin of claim 1, further comprising a handle (148), wherein the handle allows the bin to be removed from the solid freeform fabrication system and a fabricated object or powder removed from the build bin while the build bin is outside of the system.

8. A build bin (102) for a solid freeform fabrication (SFF) system (100), comprising:
a flexible compartment (132); and
wherein the build bin comprises features that enable the bin to be removed from the SFF system, and wherein the bin is interchangeable with a powder supply bin (110).

9. The build bin of claim 9, wherein the flexible compartment is constructed of a polymeric film of one of the group consisting of: polyvinyl chloride, polyethylene, polyethylene copolymers, polyethylene naphthalate, polyester, polyamide, polyarylates, polybutylene terepthalate, polypropylene, polyurethane, cellulosics, and polysaccharides.

10. A solid freeform fabrication system (100), the system comprising:
means for inserting into a solid freeform fabrication system a removable, disposable powder supply bin (110);
means for inserting into a solid freeform fabrication system a removable, disposable build bin (102);
means for forming an interconnect between the powder supply bin and a piston cylinder in the system;
means for forming an interconnect between the build bin and a piston cylinder in the system;
means for communicating information about the powder in the powder supply bin to a controller for the solid freeform fabrication system;
means for dispensing powder from the powder supply bin onto a layer on a build platform in the build bin; and
means for building an object by layers, wherein each layer is formed by ejecting a binder onto the layer of powder with an inkjet print head.
